# EUROPÄISCHE PATENTSCHRIFT

(11) **EP 1 508 582 B1**
(45) Veröffentlichungstag und Bekanntmachung des Hinweises auf die Patenterteilung: **27.08.2008**
(21) Anmeldenummer: 04103130.3
(22) Anmeldetag: 02.07.2004
(51) Int. Cl.: C08G 6/02, C08L 61/02, C08L 61/14, C09D 4/06

(54) **Strahlenhärtbare Harze auf Basis hydrierter Keton- und Phenol-Aldehydharze und ein Verfahren zu ihrer Herstellung**
Radiation curable resins based on hydrogenated ketone and/or phenol-aldehyde resins and process for their preparation
Résines durcissables par rayons à base de résines cétone et/ou phénol-aldéhyde hydrogénées et procédé pour leur préparation

(30) Priorität: 22.08.2003 DE 10338560
(43) Veröffentlichungstag der Anmeldung: 23.02.2005
(73) Patentinhaber: Evonik Degussa GmbH, 45128 Essen (DE)
(72) Erfinder: Glöckner, Patrick, Dr., 40885, Ratingen (DE); Mindach, Lutz, Dr., 45770, Marl (DE); Denkinger, Peter, Dr., 48301, Nottuln (DE)

(56) Entgegenhaltungen:
- EP-A- 0 111 686
- DE-C- 870 022

## Beschreibung

Die Erfindung betrifft strahlenhärtbare Harze auf Basis carbonylhydrierter Keton-Aldehydund kemhydrierter Phenol-Aldehydharze und ein Verfahren zu ihrer Herstellung.

Strahlenhärtbare Beschichtungsstoffe haben innerhalb der letzten Jahre zunehmend an Bedeutung gewonnen, da u.a. der Gehalt an flüchtigen organischen Verbindungen (VOC) dieser Systeme gering ist.

Die filmbildenden Komponenten sind im Beschichtungsstoff relativ niedermolekular und deshalb niedrigviskos, so dass auf hohe Anteile organischer Lösemittel verzichtet werden kann. Dauerhafte Beschichtungen werden erhalten, indem nach Applikation des Beschichtungsstoffes ein hochmolekulares, polymeres Netzwerk durch z. B. UV-Licht initiierte Vernetzungsreaktionen gebildet wird.

Keton-Aldehydharze werden in Beschichtungsstoffen z. B. als Additivharze eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u.a. als filmbildende Funktionsfüllstoffe.

Üblicherweise verfügen Keton-Aldehydharze über Hydroxygruppen und können daher nur mit z. B. Polyisocyanaten oder Aminharzen vernetzt werden. Diese Vernetzungsreaktionen werden üblicherweise thermisch eingeleitet bzw. beschleunigt.

Für strahlungsinitiierte Vernetzungsreaktionen nach kationischen und/oder radikalischen Reaktionsmechanismen sind die Keton-Aldehydharze nicht geeignet.

Daher werden die Keton-Aldehydharze üblicherweise in strahlenhärtbaren Beschichtungsstoff-Systemen z. B. als filmbildende, jedoch nicht vernetzende Zusatzkomponente eingesetzt. Derartige Beschichtungen besitzen oft wegen der unvernetzten Anteile eine geringe Widerstandsfähigkeit gegenüber z. B. Benzin, Chemikalien oder Lösemitteln.

DE 23 45 624, EP 736 074, DE 28 47 796, DD 24 0318, DE 24 38 724, JP 09143396 beschreiben die Verwendung von Keton-Aldehyd- und Ketonharzen, z. B. Cyclohexanon-Formaldehydharzen in strahlenhärtbaren Systemen. Strahleninduzierte Vernetzungsreaktionen dieser Harze sind nicht beschrieben.

EP 0 902 065 beschreibt die Verwendung von nicht strahlungshärtbaren Harzen aus Harnstoff(derivaten), Keton oder Aldehyden als Zusatzkomponente im Gemisch mit strahlungshärtbaren Harzen.

DE 24 38 712 beschreibt strahlungshärtende Druckfarben aus filmbildenden Harzen, Ketonund Keton-Formaldehydharzen sowie polymerisierbaren Komponenten wie polyfunktionellen Acrylatestern mehrwertiger Alkohole. Dem Fachmann ist offensichtlich, dass eine strahleninduzierte Vernetzungsreaktion der modifizierten Keton-Aldehyd- und Ketonharze nur durch die Verwendung von ungesättigten Fettsäuren eintreten kann. Es ist jedoch bekannt, dass Harze mit einem hohen Ölgehalt zu unerwünschten Vergilbungen neigen.

US 4,070,500 beschreibt die Verwendung nicht-strahlungshärtbarer Keton-Formaldehyd-Harze als filmbildende Komponente in strahlungshärtbaren Tinten.

Die Umwandlung der Carbonylgruppen in sekundäre Alkohole durch Hydrierung von Keton-Aldehydharzen wird seit langem praktiziert (DE-PS 8 70 022, DE 32 41 735). Ein typisches und bekanntes Produkt ist Kunstharz SK der Degussa AG. Ebenfalls bekannt sind Harze auf Phenolharzbasis, deren aromatische Einheiten durch Hydrierung in cycloaliphatische Gruppen umgewandelt wurden, wobei ein Teil der Hydroxygruppen erhalten bleibt. Die Verwendung carbonyl- und kernhydrierter Keton-Aldehydharze auf Basis von Ketonen, die aromatische Gruppen enthalten, ist ebenfalls möglich. Ein solches Harz wird in DE 33 34 631 beschrieben. Die OH-Zahl derartiger Produkte ist mit über 200 mg KOH/g sehr hoch.

Aufgabe der vorliegenden Erfindung war es, carbonylhydrierte Keton-Aldehydharze und/oder kernhydrierte Phenol-Aldehydharze chemisch derart zu modifzieren, dass strahlenhärtbare Harze resultieren, die verseifungsstabil und widerstandsfähig sind sowie eine hohe Vergilbungsbeständigkeit besitzen.

Überraschender Weise konnte diese Aufgabe gelöst werden, indem carbonylhydrierte Keton-Aldehydharze und/oder kernhydrierte Phenolharze polymeranalog mit ethylenisch ungesättigten Gruppierungen versehen wurden.

Es hat sich gezeigt, dass carbonylhydrierte Keton-Aldehydharze und/oder kernhydrierte Phenol-Aldehydharze, die über ethylenisch ungesättigte Gruppierungen verfügen, in Gegenwart geeigneter Verbindungen wie z. B. Photoinitiatoren ggf. in Gegenwart geeigneter Photosensibilisatoren durch z. B. UV-Licht induziert in ein polymeres Netzwerk umgewandelt werden können, das, je nach Anteil ethylenisch ungesättigter Gruppen, eine hohe bis sehr hohe Härte und Widerstandsfähigkeit besitzt.

Gegenstand sind auch strahlenhärtbare Harze, erhalten durch polymeranaloge Umsetzung von
A) mindestens einem carbonylhydrierten Keton-Aldehydhatz, und/oder
B) mindestens einem kernhydrierten Phenol-Aldehydharz, mit
C) mindestens einer Verbindung, welche mindestens eine ethylenisch ungesättigte Gruppierung und gleichzeitig mindestens eine gegenüber A) und/oder B) reaktive Gruppierung aufweist.

Als Ketone zur Herstellung der carbonylhydrierten Keton-Aldehydharze (Komponente A) eignen sich alle Ketone, insbesondere Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Im allgemeinen können aber alle in der Literatur für Ketonharzsynthesen als geeignet genannten Ketone, in der Regel alle C-H-aciden Ketone, eingesetzt werden. Bevorzugt werden carbonylhydrierte Keton-Aldehydharze auf Basis der Ketone Acetophenon, Cyclohexanon, 4-tert.-Butylcyclohexanon, 3,3,5-Trimethylcyclohexanon und Heptanon allein oder in Mischung.

Als Aldehyd-Komponente der carbonylhydrierten Keton-Aldehydharze (Komponente A) eignen sich prinzipiell unverzeigte oder verzweigte Aldehyde, wie z. B. Formaldehyd, Acetaldehyd, n-Butyraldehyd und/oder iso-Butyraldehyd, Valerianaldehyd sowie Dodecanal. Im allgemeinen können alle in der Literatur für Ketonharzsynthesen als geeignet genannten Aldehyde eingesetzt werden. Bevorzugt wird jedoch Formaldehyd allein oder in Mischungen verwendet.

Das benötigte Formaldehyd wird üblicherweise als ca. 20 bis 40 Gew.-%ige wässrige oder alkoholische (z. B. Methanol oder Butanol) Lösung eingesetzt. Andere Einsatzformen des Formaldehyds wie z. B. auch die Verwendung von para-Formaldehyd oder Trioxan sind ebenfalls möglich. Aromatische Aldehyde, wie z. B. Benzaldehyd, können in Mischung mit Formaldehyd ebenfalls enthalten sein.

Besonders bevorzugt werden als Ausgangsverbindungen für die Komponente A) carbonylhydrierte Harze aus Acetophenon, Cyclohexanon, 4-tert.-Butylcyclohexanon, 3,3,5-Trimethylcyclohexanon sowie Heptanon allein oder in Mischung und Formaldehyd eingesetzt.

Die Harze aus Keton und Aldehyd werden in Gegenwart eines Katalysators mit Wasserstoff bei Drücken von bis zu 300 bar hydriert. Dabei wird die Carbonylgruppe des Keton-Aldehydharzes in eine sekundäre Hydroxygruppe umgewandelt. Je nach Reaktionsbedingungen kann ein Teil der Hydroxygruppen abgespalten werden, so dass Methylengruppen resultieren. Zur Veranschaulichung dient folgendes Schema:

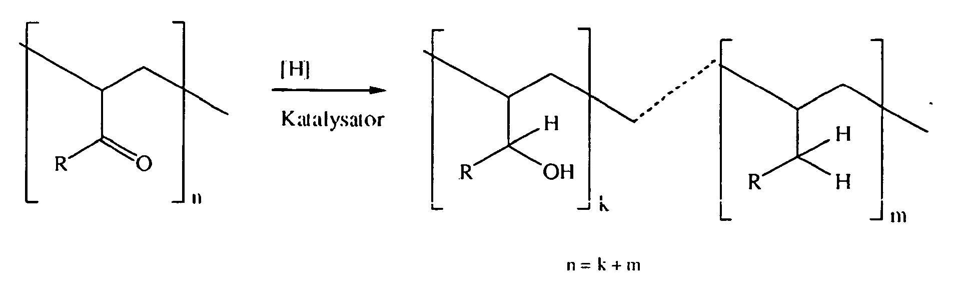

Als Komponente B) werden kemhydrierte Phenol-Aldehydharze des Novolaktyps unter Verwendung der Aldehyde wie z. B. Formaldehyd, Butyraldehyd oder Benzaldehyd, bevorzugt Formaldehyd, eingesetzt. Im untergeordneten Maße können nicht hydrierte Novolake verwendet werden, die dann aber geringere Lichtechtheiten besitzen.

Besonders geeignet sind kemhydrierte Harze auf Basis alkylsubstituierter Phenole. Im allgemeinen können alle in der Literatur für Phenolharzsynthesen als geeignet genannten Phenole eingesetzt werden.

Als Beispiel für geeignete Phenole seien Phenol, 2- und 4-tert.-Butylphenol, 4-Amylphenol, Nonylphenol, 2-, und 4-tert.-Octylphenol, Dodecylphenol, Kresol, Xylenole sowie Bisphenole genannt. Sie können allein oder in Mischung verwendet werden.

Ganz besonders bevorzugt werden kemhydrierte, alkylsubstituierte Phenol-Formaldehydharze des Novolaktyps eingesetzt. Bevorzugte Phenolharze sind Umsetzungsprodukte aus Formaldehyd und 2- und 4-tert.-Butylphenol, 4-Amylphenol, Nonylphenol, 2-, und 4-tert.-Octylphenol sowie Dodecylphenol.

Die Hydrierung der Novolake erfolgt in Gegenwart eines geeigneten Katalysators mit Wasserstoff. Dabei wird durch die Wahl des Katalysators der aromatische Ring in einen cycloaliphatischen umgewandelt. Durch geeignete Wahl der Parameter bleibt die Hydroxygruppe erhalten.

Zur Veranschaulichung dient folgendes Schema:

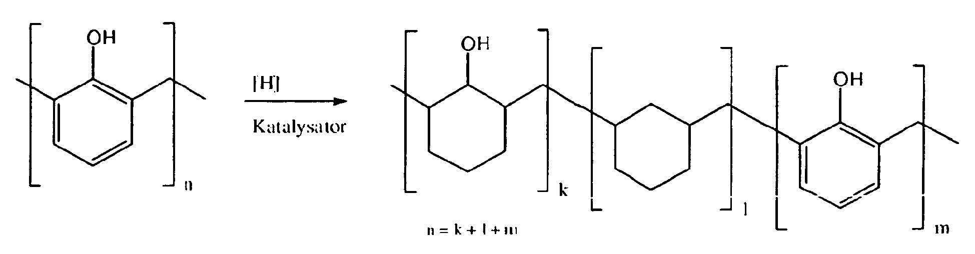

Durch die Wahl der Hydrierbedingungen können auch die Hydroxygruppen hydriert werden, so dass cycloaliphatische Ringe entstehen. Die kernhydrierten Harze besitzen OH-Zahlen von 50 bis 450 mg KOH/g, bevorzugt 100 bis 350 mg KOH/g, besonders bevorzugt von 150 bis 300 mg KOH/g. Der Anteil an aromatischen Gruppen liegt unter 50 Gew.-%, bevorzugt unter 30 Gew.-%, besonders bevorzugt unter 10 Gew.-%.

Die der Erfindung zugrundeliegenden strahlenhärtbaren Harze werden durch polymeranaloge Umsetzung der carbonylhydrierten Keton-Aldehydharze und/oder der kemhydrierten Phenolharze in der Schmelze oder in Lösung eines geeigneten Lösemittels mit der Komponente C) erhalten. Geeignet sind Maleinsäureanhydrid, (Meth)acrylsäurederivaten wie z. B. (Meth)acryloylchlorid, Glycidyl(meth)acrylat, (Meth)acrylsäure und/oder deren niedermolekularen Alkylestern und/oder Anhydriden allein oder in Mischung. Darüber hinaus lassen sich strahlenhärtbare Harze erhalten durch Umsetzung der carbonylhydrierten Keton-Aldehydharze und kernhydrierten Phenolharze mit Isocyanaten, die über eine ethylenisch ungesättigte Gruppierung verfügen, wie z. B. (Meth)acryloylisocyanat, α,α-Dimethyl-3-isopropenylbenzylisocyanat, (Meth)acrylalkylisocyanat mit Alkylspacern, die über ein bis 12, bevorzugt 2 bis 8, besonders bevorzugt 2 bis 6 Kohlenstoffatome verfügen, wie z. B. Methacrylethylisocyanat, Methacrylbutylisocyanat. Außerdem haben sich Umsetzungsprodukte aus Hydroxyalkyl(meth)acrylaten, deren Alkylspacer über ein bis 12, bevorzugt 2 bis 8, besonders bevorzugt 2 bis 6 Kohlenstoffatome verfügen, und Diisocyanaten wie z. B. Cyclohexandiisocyanat, Methylcyclohexandiisocyanat, Ethylcyclohexandiisocyanat, Propylcyclohexandiisocyanat, Methyldiethylcyclohexandiisocyanat, Phenylendiisocyanat, Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Iso-cyanatomethyl-1,8-octandiisocyanat (TIN), Dekandi- und triisocyanat, Undekandi- und -triisocyanat, Dodecandi- und - triisocyanate, Isophorondiisocyanat (IPDI), Bis(isocyanatomethylcyclohexyl)methan (H₁₂MDI), Isocyanatomethylmethylcyclohexyl-isocyanat, 2,5(2,6)-Bis(isocyanatomethyl)bicyclo[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI) allein oder in Mischung als vorteilhaft erwiesen. Als Beispiele seien die Umsetzungsprodukte im molaren Verhältnis von 1:1 von Hydroxyethylacrylat und/oder Hydroxyethylmethacrylat mit Isophorondiisocyanat und/oder H₁₂MDI und/oder HDI genannt.

Eine andere bevorzugte Klasse von Polyisocyanaten sind die durch Trimerisierung, Allophanatisierung, Biuretisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie beispielsweise IPDI, HDI und/oder HMDI mit mehrwertigen Alkoholen (z.B. Glycerin, Trimethylolpropan, Pentaerythrit) bzw. mehrwertigen Polyaminen oder die Triisocyanurate, die durch Trimerisierung der einfachen Diisocyanate, wie beispielsweise IPDI, HDI und HMDI, erhältlich sind.

Gegebenenfalls kann ein geeigneter Katalysator zur Herstellung der erfindungsgemäßen Harze eingesetzt werden. Geeignet sind alle in der Literatur bekannten Verbindungen, die eine OH-NCO-Reaktion beschleunigen, wie z.B. Diazabicyclooctan (DABCO) oder Dibutylzinndilaurat (DBTL).

Je nach Verhältnis der Edukte zueinander werden Harze erhalten, die gering bis hoch funktionell sind. Durch die Wahl der Edukte ist auch die Einstellung der späteren Härte des vemetzten Films möglich. Wird z. B. ein Hartharz wie das hydrierte Acetophenon-Formaldehydharz mit α,α-Dimethyl-3-isopropenylbenzylisocyanat umgesetzt, werden Produkte höherer Härte erhalten als durch die Verwendung von (Meth)acrylethylisocyanat und/oder Hydroxyethylacrylat-Isophorondiisocyanat-Addukten; die Flexibilität ist allerdings dann geringer. Auch hat sich gezeigt, dass die Reaktivität von sterisch wenig gehinderten ethylenisch ungesättigten Verbindungen - wie z. B. von Hydroxyethylacrylat - höher ist als bei solchen, die sterisch gehindert sind wie z. B. α,α-Dimethyl-3-isopropenylbenzylisocyanat.

Es ist auch möglich, einen Teil der carbonylhydrierten Keton-Aldehydharze A) und / oder kernhydrierten Phenol-Aldehydharze B) durch weitere hydroxyfunktionelle Polymere wie z.B. hydroxyfunktionelle Polyether, Polyester und / oder Polyacrylate zu ersetzen. Dabei können direkt Mischungen dieser Polymere mit den Komponenten A) und / oder B) polymeranalog mit Komponente C) umgesetzt werden. Es hat sich gezeigt, dass zunächst auch Addukte von A) und / oder B) mit z.B. hydroxyfunktionellen Polyethern, Polyestern und / oder Polyacrylaten unter Verwendung der genannten Di- und / oder Triisocyanate hergestellt werden können, die dann erst mit Komponente C) polymeranalog umgesetzt werden. Im Gegensatz zu den "reinen" carbonylhydrierten Keton-Aldehydharzen A) und / oder kernhydrierten Phenol-Aldehydharz B) können hierdurch Eigenschaften, wie z.B. Flexibilität, Härte noch besser eingestellt werden. Die weiteren hydroxyfunktionellen Polymere besitzen in der Regel Molekulargewichte Mn zwischen 200 und 10 000 g/mol, bevorzugt zwischen 300 und 5 000 g/mol.

Gegenstand der Erfindung ist auch ein Verfahren zur Herstellung von strahlenhärtbaren Harzen, erhalten durch polymeranaloge Umsetzung von
A) carbonylhydrierten Keton-Aldehydharzen, und/oder
B) kernhydrierten Phenol-Aldehydharzen, mit
C) Verbindungen, welche mindestens eine ethylenisch ungesättigte Gruppierung und gleichzeitig mindestens eine gegenüber A) und/oder B) reaktive Gruppierung aufweisen, gegebenenfalls unter Verwendung weiterer hydroxyfunktionalisierter Polymere.

Die Herstellung der erfindungszugrundeliegenden Harze erfolgt in der Schmelze oder in Lösung eines geeigneten, organischen Lösemittels des carbonylhydrierten Keton-Aldehydharzes und/oder kernhydrierten Phenol-Aldehydharzes.

Hierzu wird in einer bevorzugten Ausführungsform I zu der Lösung oder Schmelze des carbonylhydrierten Keton-Aldehydharzes A) und/oder kernhydrierten Phenol-Aldehydharzes B) die Verbindung, welche zum einen mindestens eine ethylenisch ungesättigte Gruppierung und gleichzeitig mindestens eine gegenüber A) und B) reaktive Gruppierung aufweist, ggf. in Anwesenheit eines geeigneten Katalysators zugegeben.

Je nach Reaktivität der Komponente C) wird die Temperatur der Umsetzung gewählt. Bei Verwendung von Isocyanaten als Komponente C) haben sich Temperaturen zwischen 30 und 150°C, bevorzugt zwischen 50 und 140°C bewährt.

Das gegebenenfalls enthaltene Lösemittel kann falls gewünscht nach beendeter Reaktion abgetrennt werden, wobei dann in der Regel ein Pulver des erfindungsgemäßen Produktes erhalten wird.

Es hat sich als vorteilhaft erwiesen, 1 mol des carbonylhydrierten Keton-Aldehydharzes und/oder kernhydrierten Phenol-Aldehydharzes - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In einer bevorzugten Ausführungsform II
wird zu der Lösung oder Schmelze des carbonylhydrierten Keton-Aldehydharzes A) und/oder kernhydrierten Phenol-Aldehydharzes B) und dem hydroxyfunktionellen Polymer, wie z.B. Polyether, Polyester und / oder Polyacrylat die Verbindung, welche mindestens eine ethylenisch ungesättigte Gruppierung und gleichzeitig mindestens eine gegenüber A) und B) und dem zusätzlichen Polymer reaktive Gruppierung aufweist, ggf. in Anwesenheit eines geeigneten Katalysators zugegeben.

Je nach Reaktivität der Komponente C) wird die Temperatur der Umsetzung gewählt. Bei Verwendung von Isocyanaten als Komponente C) haben sich Temperaturen zwischen 30 und 150°C, bevorzugt zwischen 50 und 140°C bewährt.

Das ggf. enthaltene Lösemittel kann falls gewünscht nach beendeter Reaktion abgetrennt werden, wobei dann in der Regel ein Pulver des erfindungsgemäßen Produktes erhalten wird.

Es hat sich als vorteilhaft erwiesen, 1 mol der Komponente A) und / oder Komponente B) und /oder zusätzlicher Polymere, bezogen auf Mₙ, mit 0,5 bis 15 mol, bevorzugt 1 bis 10 mol, besonders 2 bis 8 mol der ungesättigten Verbindung (Komponente C) zur Reaktion zu bringen.

In einer bevorzugten Ausführungsform III wird zu der Lösung oder Schmelze des carbonylhydrierten Keton-Aldehydharzes A) und/oder kernhydrierten Phenol-Aldehydharzes B) und dem hydroxyfunktionellen Polymer, wie z.B. Polyether, Polyester und / oder Polyacrylat ein di- und / oder trifunktionelles Isocyanat gegeben und ein hydroxyfunktionelles Präaddukt hergestellt. Erst dann wird die Verbindung, welche mindestens eine ethylenisch ungesättigte Gruppierung und gleichzeitig mindestens eine gegenüber A) und B) und dem zusätzlichen Polymer reaktive Gruppierung aufweist, ggf. in Anwesenheit eines geeigneten Katalysators zugegeben.

Je nach Reaktivität der Komponente C) wird die Temperatur der Umsetzung gewählt. Bei Verwendung von Isocyanaten als Komponente C) haben sich Temperaturen zwischen 30 und 150°C, bevorzugt zwischen 50 und 140°C bewährt.

Das ggf. enthaltene Lösemittel kann falls gewünscht nach beendeter Reaktion abgetrennt werden, wobei dann in der Regel ein Pulver des erfindungsgemäßen Produktes erhalten wird. Es hat sich als vorteilhaft erwiesen, 1 mol der Komponente A) und / oder Komponente B) und /oder zusätzlicher Polymere, bezogen auf M_{n,} mit 0,5 bis 15 mol, bevorzugt 1 bis 10 mol, besonders 2 bis 8 mol der ungesättigten Verbindung (Komponente C) zur Reaktion zu bringen.

In Gegenwart geeigneter Photoinitiatoren, ggf. in Anwesenheit geeigneter Photosensibilisatoren lassen sich diese Harze durch Bestrahlung in polymere, unlösliche Netzwerke überführen, die, je nach Gehalt ethylenisch ungesättigter Gruppen, Elastomere bis Duroplaste ergeben.

Die folgenden Beispiele sollen die gemachte Erfindung weiter erläutern aber nicht ihren Anwendungsbereich beschränken:

### Beispiel 1:

Die Synthese erfolgt, indem 1 mol Kunstharz SK (Degussa AG; hydriertes Harz ausAcetophenon und Formaldehyd OHZ = 240 mg KOH/g (Acetanhydridmethode), Mn ∼ 1000 g/mol) mit 1,5 mol eines Umsetzungsproduktes aus IPDI und Hydroxyethylacrylat im Verhältnis 1:1 in Anwesenheit von 0,2 % (auf Harz) 2,6-Bis(tert-butyl)-4-methylphenol (Ralox BHT, Degussa AG) und 0,1 % Dibutylzinndilaurat (auf Harz, 65 %ig in Methoxypropylacetat) in einem Dreihalskolben mit Rührer, Rückflusskühler und Thermofühler in Stickstoffatmosphäre solange bei 80°C zur Reaktion gebracht werden, bis eine NCO-Zahl von kleiner 0,1 erreicht ist. Es wird eine helle, klare Lösung mit einer dynamischen Viskosität von 51,56 Pa·s erhalten.

### Beispiel 2:

1 mol Kunstharz SK (Degussa AG; OHZ = 240 mg KOH/g (Acetanhydridmethode), Mn ∼ 1000 g/mol) und 4 mol eines Umsetzungsproduktes aus IPDI und Hydroxyethylacrylat im Verhältnis 1:1 werden in Anwesenheit von 0,2 % (auf Harz) 2,6-Bis(tert-butyl)-4-methylphenol (Degussa AG) sowie 0,1 % Dibutylzinndilaurat (auf Harz, 65 %ig in Methoxypropylacetat) in einem Dreihalskolben mit Rührer, Rückflusskühler und Thermofühler in Stickstoffatmosphäre bis zu einer NCO-Zahl unter 0,1 bei 80°C zur Reaktion gebracht. Die erhaltene Lösung mit einer dynamischen Viskosität von 26,2 Pa·s ist hell und klar.

Die Harzlösungen aus Beispiel 1. und 2. wurden mit Darocur 1173 (Ciba Specialty Chemicals, 1,5 % bez. auf Festharz) versehen, auf eine Glasplatte aufgetragen und das Lösemittel bei erhöhter Temperatur (30 min, 80°C) verdampft. Dann wurden die Filme mittels UV-Licht (Quecksilber-Mitteldruck-Lampe, 70 W / optischer Filter 350 nm) ca. 12 sec. lang ausgehärtet. Die zuvor löslichen Filme sind nicht mehr löslich in Methylethylketon.

## Patentansprüche

1. Strahlenhärtbare Harze, erhalten durch polymeranaloge Umsetzung von
A) mindestens einem carbonylhydrierten Keton-Aldehydharz, und/oder
B) mindestens einem kernhydrierten Phenol-Aldehydharz, mit
C) mindestens einer Verbindung, welche mindestens eine ethylenisch ungesättigte Gruppierung und gleichzeitig mindestens eine gegenüber A) und/oder B) reaktive Gruppierung aufweist.

2. Strahlenhärtbare Harze nach Anspruch 1, erhalten durch polymeranaloge Umsetzung von
A) mindestens einem carbonylhydrierten Keton-Aldehydharz, und/oder
B) mindestens einem kernhydrierten Phenol-Aldehydharz, mit
C) mindestens einer Verbindung, welche mindestens eine ethylenisch ungesättigte Gruppierung und gleichzeitig mindestens eine gegenüber A) und/oder B) reaktive Gruppierung aufweist,
und mindestens einem weiteren hydroxyfunktionalisierten Polymer.

3. Strahlenhärtbare Harze nach Anspruch 2,
**dadurch gekennzeichnet**,
das Polyether, Polyester und/oder Polyacrylat eingesetzt werden.

4. Strahlenhärtbare Harze nach Anspruch 2 oder 3,
wobei Mischungen der weiteren Polymere mit den Keton-Aldehydharzen A) und/oder Phenol-Aldehydharzen B) polymeranalog mit Komponente C) umgesetzt werden.

5. Strahlenhärtbare Harze nach Anspruch 2 bis 4,
wobei zunächst Addukte aus den Keton-Aldehydharzen A) und/oder Phenol-Aldehydharzen B) mit den weiteren Polymeren unter Verwendung geeigneter Di- und/oder Triisocyanaten hergestellt werden, die erst dann mit Komponente C) polymeranalog umgesetzt werden.

6. Strahlenhärtbare Harze nach mindestens einem der vorhergehenden Ansprüche,
**dadurch gekennzeichnet,**
**dass** C-H-acide Ketone in der Komponente A) eingesetzt werden.

7. Strahlenhärtbare Harze nach mindestens einem der vorherigen Ansprüche,
**dadurch gekennzeichnet,**
**dass** in den carbonylhydrierten Keton-Aldehydharzen der Komponente A), Ketone ausgewählt aus Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon, Cyclooctanon, Cyclohexanon als Ausgangsbindungen allein oder in Mischungen eingesetzt werden.

8. Strahlenhärtbare Harze nach mindestens einem der vorherigen Ansprüche,
**dadurch gekennzeichnet,**
**dass** in den carbonylhydrierten Keton-Aldehydharzen der Komponente A) alkylsubstituierte Cyclohexanone mit einem oder mehreren Alkykresten, die insgesamt 1 bis 8 Kohlenstoffatome aufweisen, einzeln oder in Mischung eingesetzt werden.

9. Strahlenhärtbare Harze nach Anspruch 8,
**dadurch gekennzeichnet,**
**dass** 4-tert.-Amylcyclohexanon, 2-sek.-Butylcyclohexanon, 2-tert.-Butylcyclohexanon, 4-tert.-Butylxyclohexanon, 2-Methylcyclohexanon und/oder 3,3,5-Trimethylcyclohexanon eingesetzt werden.

10. Strahlenhärtbare Harze nach mindestens einem der vorherigen Ansprüche,
**dadurch gekennzeichnet,**
**dass** Cyclohexanon, 4-tert.-Butylcyclohexanon, 3,3,5-Trimethylcyclohexanon und Heptanon allein oder in Mischung in der Komponente A) eingesetzt werden.

11. Strahlenhärtbare Harze nach mindestens einem der vorherigen Ansprüche,
**dadurch gekennzeichnet,**
**dass** als Aldehyd-Komponente der carbonylhydrierten Keton-Aldehydharze in Komponente A) Formaldehyd, Acetaldehyd, n-Butyraldehyd und/oder iso-Butyraldehyd, Valerianaldehyd, Dodecanal allein oder in Mischungen eingesetzt werden.

12. Strahlenhärtbare Harze nach Anspruch 11,
**dadurch gekennzeichnet,**
**dass** Formaldehyd und / oder para-Formaldehyd und / oder Trioxan eingesetzt werden.

13. Strahlenhärtbare Harze nach Anspruch 1 oder 2,
**dadurch gekennzeichnet,**
**dass** Hydrierungsprodukte der Harze aus Acetophenon, Cyclohexanon, 4-tert.-Butylcyclohexanon, 3,3,5-Trimethylcyclohexanon, Heptanon allein oder in Mischung und Formaldehyd als Komponente A eingesetzt werden.

14. Strahlenhärtbare Harze nach einem der vorherigen Ansprüche,
**dadurch gekennzeichnet,**
**dass** in den kernhydrierten Phenol-Aldehydharzen (Komponente B) die Aldehyde, Formaldehyd, Butyraldehyd und/oder Benzaldehyd eingesetzt werden.

15. Strahlenhärtbare Harze nach einem der vorherigen Ansprüche,
**dadurch gekennzeichnet,**
**dass** nicht hydrierte Phenol-Aldehydharze im untergeordneten Maße eingesetzt werden.

16. Strahlenhärtbare Harze nach mindestens einem der vorherigen Ansprüche,
**dadurch gekennzeichnet,**
**dass** in Komponente B) kernhydrierte Harze auf Basis alkylsubstituierter Phenole eingesetzt werden.

17. Strahlenhärtbare Harze nach Anspruch 16,
**dadurch gekennzeichnet,**
**dass** 4-tert.-Butylphenol, 4-Amylphenol, Nonylphenol, tert.-Octylphenol, Dodecylphenol, Kresol, Xylenole sowie Bisphenole allein oder in Mischungen eingesetzt werden.

18. Strahlenhärtbare Harze nach mindestens einem der vorherigen Ansprüche,
**dadurch gekennzeichnet,**
**dass** als Komponente C) Maleinsäure eingesetzt wird.

19. Strahlenhärtbare Harze nach mindestens einem der vorherigen Ansprüche,
**dadurch gekennzeichnet,**
**dass** als Komponente C) (Meth)acrylsäure und/oder Derivate eingesetzt werden.

20. Strahlenhärtbare Harze nach Anspruch 19,
**dadurch gekennzeichnet,**
**dass** als Komponente C) (Meth)acryloylchlorid, Glycidyl(meth)acrylat, (Meth)acrylsäure und/oder deren niedermolekularen Alkylester und/oder Anhydriden allein oder in Mischung eingesetzt werden.

21. Strahlenhärtbare Harze nach mindestens einem der vorherigen Ansprüche,
**dadurch gekennzeichnet**,
das als Komponente C) Isocyanate, die über eine ethylenisch ungesättigte Gruppierung verfügen, bevorzugt (Meth)acryloylisocyanat, α,α-Dimethyl-3-isopropenylbenzylisocyanat, (Meth)acrylalkylisocyanat mit Alkylspacern, die über 1 bis 12, bevorzugt 2 bis 8, besonders bevorzugt 2 bis 6 Kohlenstoffatome verfügen, bevorzugt Methacrylethylisocyanat, Methacrylbutylisocyanat, eingesetzt werden.

22. Strahlenhärtbare Harze nach mindestens einem der vorherigen Ansprüche,
**dadurch gekennzeichnet,**
**dass** als Komponente C) Umsetzungsprodukte aus Hydroxyalkyl(meth)acrylaten, deren Alkylspacer über 1 bis 12, bevorzugt 2 bis 8, besonders bevorzugt 2 bis 6 Kohlenstoffatome verfügen, mit Diisocyanate eingesetzt werden.

23. Strahlenhärtbare Harze nach Anspruch 22,
**dadurch gekennzeichnet,**
**dass** Diisocyanate ausgewählt aus Cyclohexandiisocyanat, Methylcyclohexandiisocyanat, Ethylcyclohexandiisocyanat, Propylcyclohexandiisocyanat, Methyldiethylcyclohexandiisocyanat, Phenylendiisocyanat, Toluylendiisocyanat, Bis(isocyanatophenyl)methan, Propandiisocyanat, Butandiisocyanat, Pentandiisocyanat, wie Hexamethylendiisocyanat (HDI), 1,5-Diisocyanato-2-methylpentan (MPDI), Heptandiisocyanat, Octandiisocyanat, 1,6-Diisocyanato-2,4,4-trimethylhexan, 1,6-Diisocyanato-2,2,4-trimethylhexan (TMDI), 4-Iso-cyanatomethyl-1,8-octandiisocyanat (TIN), Dekandi- und triisocyanat, Undekandi- und -triisocyanat, Dodecandi- und - triisocyanate, Isophorondiisocyanat (IPDI), Bis(isocyanatomethylcyclohexyl)methan (H₁₂MDI), Isocyanatomethylmethylcyclohexylisocyanat, 2,5(2,6)-Bis(isocyanatomethyl)bicyclo[2.2.1]heptan (NBDI), 1,3-Bis(isocyanatomethyl)-cyclohexan (1,3-H₆-XDI), 1,4-Bis(isocyanatomethyl)cyclohexan (1,4-H₆-XDI) allein oder in Mischungen, eingesetzt werden.

24. Strahlenhärtbare Harze nach Anspruch 23,
**dadurch gekennzeichnet,**
**dass** Polyisocyanate hergestellt durch Trimerisierung, Allophanatisierung, Biuretisierung und/oder Urethanisierung einfacher Diisocyanate eingesetzt werden.

25. Strahlenhärtbare Harze nach einem der vorherigen Ansprüche,
**dadurch gekennzeichnet,**
**dass** als Komponente C) die Umsetzungsprodukte im molaren Verhältnis von 1:1 von Hydroxyethylacrylat und/oder Hydroxyethylmethacrylat mit Isophorondiisocyanat und/oder H₁₂MDI und/oder HDI eingesetzt werden.

26. Strahlenhärtbare Harze nach mindestens einem der vorherigen Ansprüche,
**dadurch gekennzeichnet,**
**dass** 1 mol des carbonylhydrierten Keton-Aldehydharzes und/oder kernhydrierten Phenol-Aldehydharzes, bezogen auf Mₙ, und 0,5 bis 15 mol, bevorzugt 1 bis 10 mol, besonders 2 bis 8 mol der ungesättigten Verbindung eingesetzt werden.

27. Verfahren zur Herstellung von strahlenhärtbaren Harzen durch polymeranaloge Umsetzung von
A)mindestens einem carbonylhydrierten Keton-Aldehydharz, und/oder
B) mindestens einem kernhydrierten Phenol-Aldehydharz, mit
C) mindestens einer Verbindung, welche mindestens eine ethylenisch ungesättigte Gruppierung und gleichzeitig mindestens eine gegenüber A) und/oder B) reaktive Gruppierung aufweist.

28. Verfahren zur Herstellung von strahlenhärtbaren Harzen durch polymeranaloge Umsetzung von
A) mindestens einem carbonylhydrierten Keton-Aldehydharz, und/oder
B) mindestens einem kernhydrierten Phenol-Aldehydharz, mit
C) mindestens einer Verbindung, welche mindestens eine ethylenisch ungesättigte Gruppierung und gleichzeitig mindestens eine gegenüber A) und/oder B) reaktive Gruppierung aufweist,
und mindestens einem weiteren hydroxyfunktionalisierten Polymer.

29. Verfahren nach Anspruch 27 oder 28,
**dadurch gekennzeichnet,**
**dass** ein Katalysator eingesetzt wird.

30. Verfahren nach Anspruch 27 bis 29,
**dadurch gekennzeichnet,**
**dass** in der Schmelze oder in einem Lösemittel umgesetzt wird.

31. Verfahren nach mindestens einem der vorherigen Ansprüche 27 bis 30,
**dadurch gekennzeichnet,**
**dass** Verbindungen nach mindestens einem der Ansprüche 2 bis 26 eingesetzt werden.

32. Verfahren nach mindestens einem der Ansprüche 27 bis 31,
**dadurch gekennzeichnet,**
**dass** zu der Lösung oder Schmelze der Keton-Aldehydharze A) und/oder Phenol-Aldehydharze B) die Verbindung C), gegebenenfalls in Anwesenheit eines geeigneten Katalysators, zugegeben wird.

33. Verfahren nach mindestens einem der Ansprüche 27 bis 31,
**dadurch gekennzeichnet,**
**dass** zu der Lösung oder Schmelze der Keton-Aldehydharze A) und/oder Phenol-Aldehydharze B) und dem hydroxyfunktionellen Polymer die Verbindung C), gegebenenfalls in Anwesenheit eines geeigneten Katalysators, zugegeben wird.

34. Verfahren nach mindestens einem der Ansprüche 27 bis 31,
**dadurch gekennzeichnet,**
**dass** zu der Lösung oder Schmelze der Keton-Aldehydharze A) und/oder Phenol-Aldehydharze B) und dem hydroxyfunktionellen Polymer, ein di- und/oder trifunktionelles Isocyanat gegeben und ein hydroxyfunktionelles Präaddukt hergestellt wird und anschließend die Verbindung C), gegebenenfalls in Anwesenheit eines geeigneten Katalysators zugegeben wird.

35. Verfahren nach mindestens einem der Ansprüche 27 bis 34,
**dadurch gekennzeichnet,**
**dass** bei Temperaturen zwischen 30 und 150 °C, bevorzugt zwischen 50 und 140 °C, umgesetzt wird.

36. Verfahren nach mindestens einem der Ansprüche 27 bis 35,
**dadurch gekennzeichnet,**
**dass** Polyether, Polyester und/oder Polyacrylat als hydroxyfunktionalisiertes Polymer eingesetzt werden.

## Claims

1. A radiation-curable resin obtained by polymer-analogously reacting
A) at least one carbonyl-hydrogenated ketone-aldehyde resin and/or
B) at least one ring-hydrogenated phenol-aldehyde resin with
C) at least one compound comprising at least one ethylenically unsaturated moiety having at the same time at least one moiety which is reactive toward A) and/or B).

2. A radiation-curable resin according to claim 1, obtained by polymer-analogously reacting
A) at least one carbonyl-hydrogenated ketone-aldehyde resin and/or
B) at least one ring-hydrogenated phenol-aldehyde resin with
C) at least one compound comprising at least one ethylenically unsaturated moiety and at the same time at least one moiety which is reactive toward A) and/or B),
and at least one further hydroxyl-functionalized polymer.

3. A radiation-curable resin according to claim 2, **characterized in that** polyethers, polyesters and/or polyacrylate are used.

4. A radiation-curable resin according to either of claims 2 and 3, mixtures of the further polymers with the ketone-aldehyde resins A) and/or phenol-aldehyde resins B) being reacted polymer-analogously with component C).

5. A radiation-curable resin according to any of claims 2 to 4, adducts of the ketone-aldehyde resins A) and/or phenol-aldehyde resins B) with the further polymers being prepared first of all, using suitable di- and/or triisocyanates, and these adducts being only then reacted polymer-analogously with component C).

6. A radiation-curable resin according to at least one of the preceding claims, **characterized in that** C-H-acidic ketones are used in component A).

7. A radiation-curable resin according to at least one of the preceding claims, **characterized in that** ketones selected from acetone, acetophenone, methyl ethyl ketone, heptan-2-one, pentan-3-one, methyl isobutyl ketone, cyclopentanone, cyclododecanone, mixtures of 2,2,4- and 2,4,4-trimethylcyclopentanone, cycloheptanone, cyclooctanone, and cyclohexanone are used as starting compounds, alone or in mixtures, in the carbonyl-hydrogenated ketone-aldehyde resins of component A).

8. A radiation-curable resin according to at least one of the preceding claims, **characterized in that** alkyl-substituted cyclohexanones having one or more alkyl radicals containing in total 1 to 8 carbon atoms, individually or in a mixture, are used in the carbonyl-hydrogenated ketone-aldehyde resins of component A).

9. A radiation-curable resin according to claim 8, **characterized in that** 4-tert-amylcyclohexanone, 2-sec-butylcyclohexanone, 2-tert-butylcyclohexanone, 4-tert-butylcyclohexanone, 2-methylcyclohexanone, or 3,3,5-trimethylcyclohexanone are used.

10. A radiation-curable resin according to at least one of the preceding claims, **characterized in that** cyclohexanone, 4-tert-butylcyclohexanone, 3,3,5-trimethylcyclohexanone, and heptanone, alone or in a mixture, are used in component A).

11. A radiation-curable resin according to at least one of the preceding claims, **characterized in that** formaldehyde, acetaldehyde, n-butyraldehyde and/or isobutyraldehyde, valeraldehyde, and dodecanal, alone or in mixtures, are used as aldehyde component of the carbonyl-hydrogenated ketone-aldehyde resins in component A).

12. A radiation-curable resin according to claim 11, **characterized in that** formaldehyde and/or paraformaldehyde and/or trioxane are used.

13. A radiation-curable resin according to claim 1 or 2, **characterized in that** hydrogenation products of the resins formed from acetophenone, cyclohexanone, 4-tert-butylcyclohexanone, 3,3,5-trimethylcyclohexanone, and heptanone, alone or in a mixture, and formaldehyde are used as component A.

14. A radiation-curable resin according to any one of the preceding claims, **characterized in that** the aldehydes, formaldehyde, butyraldehyde and/or benzaldehyde are used in the ring-hydrogenated phenol-aldehyde resins (component B).

15. A radiation-curable resin according to any one of the preceding claims, **characterized in that** nonhydrogenated phenol-aldehyde resins are used to a minor extent.

16. A radiation-curable resin according to at least one of the preceding claims, **characterized in that** ring-hydrogenated resins based on alkyl-substituted phenols are used in component B).

17. A radiation-curable resin according to claim 16, **characterized in that** 4-tert-butylphenol, 4-amylphenol, nonylphenol, tert-octylphenol, dodecylphenol, cresol, xylenols, and bisphenols, alone or in mixtures, are used.

18. A radiation-curable resin according to at least one of the preceding claims, **characterized in that** maleic acid is used as component C).

19. A radiation-curable resin according to at least one of the preceding claims, **characterized in that** (meth)acrylic acid and/or derivatives are used as component C).

20. A radiation-curable resin according to claim 19, **characterized in that** (meth)acryloyl chloride, glycidyl (meth)acrylate, (meth)acrylic acid and/or the low molecular mass alkyl esters and/or anhydrides thereof, alone or in a mixture, are used as component C).

21. A radiation-curable resin according to at least one of the preceding claims, **characterized in that** isocyanates which possess an ethylenically unsaturated moiety, preferably (meth)acryloyl isocyanate, α,α-dimethyl-3-isopropenylbenzyl isocyanate and/or (meth)acryloylalkyl isocyanate with alkyl spacers possessing 1 to 12, preferably 2 to 8, more preferably 2 to 6 carbon atoms, preferably methacryloylethyl isocyanate and/or methacryloylbutyl isocyanate, are used as component C).

22. A radiation-curable resin according to at least one of the preceding claims, **characterized in that** reaction products of hydroxyalkyl (meth)acrylates whose alkyl spacers possess 1 to 12, preferably 2 to 8, more preferably 2 to 6 carbon atoms with diisocyanates are used as component C).

23. A radiation-curable resin according to claim 22, **characterized in that** diisocyanates selected from cyclohexane diisocyanate, methylcyclohexane diisocyanate, ethylcyclohexane diisocyanate, propylcyclohexane diisocyanate, methyl-diethylcyclohexane diisocyanate, phenylene diisocyanate, tolylene diisocyanate, bis(isocyanatophenyl)methane, propane diisocyanate, butane diisocyanate, pentane diisocyanate, such as hexamethylene diisocyanate (HDI), 1,5-diisocyanato-2-methylpentane (MPDI), heptane diisocyanate, octane diisocyanate, 1,6-diisocyanato-2,4,4-trimethylhexane, 1,6-diisocyanato-2,2,4-trimethylhexane (TMDI), 4-isocyanatomethyloctane 1,8-diisocyanate (TIN), decane di- and triisocyanate, undecane di- and triisocyanate, dodecane di- and triisocyanates, isophorone diisocyanate (IPDI), bis(isocyanatomethylcyclohexyl)methane (H₁₂MDI), isocyanatomethylmethyl-cyclohexyl isocyanate, 2,5(2,6)-bis(isocyanatomethyl)bicyclo[2.2.1]heptane (NBDI), 1,3-bis(isocyanatomethyl)cyclohexane (1,3-H₆-XDI), 1,4-bis(isocyanatomethyl)-cyclohexane (1,4-H₆-XDI), alone or in mixtures, are used.

24. A radiation-curable resin according to claim 23, **characterized in that** polyisocyanates prepared by trimerizing, allophanatizing, biuretizing and/or urethanizing simple diisocyanates are used.

25. A radiation-curable resin according to any one of the preceding claims, **characterized in that** the reaction products in a molar ratio of 1:1 of hydroxyethyl acrylate and/or hydroxyethyl methacrylate with isophorone diisocyanate and/or H₁₂MDI and/or HDI are used as component C).

26. A radiation-curable resin according to at least one of the preceding claims, **characterized in that** 1 mol of the carbonyl-hydrogenated ketone-aldehyde resin and/or ring-hydrogenated phenol-aldehyde resin - based on Mₙ - and from 0.5 to 15 mol, preferably from 1 to 10 mol, in particular from 2 to 8 mol of the unsaturated compound are used.

27. A process for preparing a radiation-curable resin by polymer-analogously reacting
A) at least one carbonyl-hydrogenated ketone-aldehyde resin, and/or
B) at least one ring-hydrogenated phenol-aldehyde resin with
C) at least one compound which contains at least one ethylenically unsaturated moiety and at the same time at least one moiety which is reactive toward A) and/or B).

28. A process for preparing a radiation-curable resin by polymer-analogously reacting
A) at least one carbonyl-hydrogenated ketone-aldehyde resin, and/or
B) at least one ring-hydrogenated phenol-aldehyde resin with
C) at least one compound which contains at least one ethylenically unsaturated moiety and at the same time at least one moiety which is reactive toward A) and/or B),
and at least one further hydroxy-functionalized polymer.

29. A process according to claim 27 or 28, **characterized in that** a catalyst is used.

30. A process according to any of claims 27 to 29, **characterized in that** reaction is carried out in the melt or in a solvent.

31. A process according to at least one of the preceding claims 27 to 30, **characterized in that** compounds according to at least one of claims 3 to 26 are used.

32. A process according to at least one of claims 27 to 31, **characterized in that** the compound C), in the presence if desired of a suitable catalyst, is added to the solution or melt of the ketone-aldehyde resins A) and/or phenol-aldehyde resins B).

33. A process according to at least one of claims 28 to 31, **characterized in that** the compound C), in the presence if desired of a suitable catalyst, is added to the solution or melt of the ketone-aldehyde resins A) and/or phenol-aldehyde resins B) and the hydroxy-functional polymer.

34. A process according to at least one of claims 28 to 31, **characterized in that** a di- and/or trifunctional isocyanate is added to the solution or melt of the ketone-aldehyde resins A) and/or phenol-aldehyde resins B) and the hydroxy-functional polymer and a hydroxy-functional preadduct is prepared and subsequently the compound C), in the presence if desired of a suitable catalyst, is added.

35. A process according to at least one of claims 27 to 34, **characterized in that** reaction is carried out at temperatures from 30 to 150°C, preferably from 50 to 140°C.

36. A process according to at least one of claims 28 to 35, **characterized in that** polyethers, polyesters and/or polyacrylate are used as hydroxy-functionalized polymer.

## Revendications

1. Résines durcissables par irradiation, obtenues par réaction polymèranalogue
A) d'au moins une résine cétone-aldéhyde hydrogénée sur le groupe carbonyle, et/ ou
B) d'au moins une résine phénol-aldéhyde hydrogénée sur le noyau avec
C) au moins un composé qui comporte au moins un groupement éthyléniquement insaturé et en même temps au moins un groupement réactif vis-à-vis de A) et /ou B).

2. Résines durcissables par irradiation selon la revendication 1, obtenues par réaction polymèreanalogue
A) d'au moins une résine cétone - aldéhyde hydrogénée sur le groupe carbonyle et/ou
B) d'au moins une résine phénol-aldéhyde hydrogénée sur le noyau, avec
C) au moins un composé qui comporte au moins un groupement éthyléniquement insaturé et en même temps au moins un groupement réactif vis-à-vis de A) et/ou B),
et au moins un autre polymère à fonctionnalité hydroxyle.

3. Résines durcissables par irradiation selon la revendication 2,
**caractérisées en ce qu'**
on utilise un polyéther, un polyester et/ ou un polyacrylate.

4. Résines durcissables par irradiation selon la revendication 2 ou 3, pour la préparation desquelles on fait réagir des mélanges des autres polymères avec les résines cétone - aldéhyde A) et/ou les résines phénol-aldéhyde B) selon une réaction polymèranalogue avec le composant C).

5. Résines durcissables par irradiation selon les revendications 2 à 4, pour la préparation desquelles on commence par produire des produits d'addition à partir des résines cétone - aldéhyde A) et/ou des résines phénol-aldéhyde B) avec les autres polymères, avec utilisation de di-et/ou triisocyanates appropriés, que l'on fait réagir seulement alors avec le composant C) selon une réaction polymèranalogue.

6. Résines durcissables par irradiation selon au moins une des revendications précédentes,
**caractérisées en ce qu'**
on utilise des cétones acides C - H dans le composant A).

7. Résines durcissables par irradiation selon au moins une des revendications précédentes,
**caractérisées en ce que**
dans les résines cétone - aldéhyde hydrogénées sur le groupe carbonyle du composant A) on utilise des cétones choisies parmi l'acétone, l'acétophénone, la méthyléthylcétone, l'heptanone-2, la pentanone-3, la méthylisobutylcétone, la cyclopentanone, la cyclododécanone, des mélanges de 2,2,4- et 2,4,4-triméthylcyclopentanones, la cycloheptanone, la cyclooctanone, la cyclohexanone, comme composés de départ, seuls ou en mélanges.

8. Résines durcissables par irradiation selon au moins une des revendications précédentes,
**caractérisées en ce que**
dans les résines cétone - aldéhyde hydrogénées sur le groupe carbonyle du composant A), on utilise des cyclohexanones alkyl substituées, comportant un radical ou plusieurs radicaux alkyle, qui comporte(nt) au total 1 à 8 atome(s) de carbone, individuellement ou en mélanges.

9. Résines durcissables par irradiation selon la revendication 8,
**caractérisées en ce qu'**
on utilise la 4-tert-amylcyclohexanone, la 2-sec-butylcyclohexanone, la 2-tert-butylcyclohexanone, la 4-tert-butylcyclohexanone, la 2-méthylcyclohexanone et/ou la 3,3,5-triméthylcyclohexanone.

10. Résines durcissables par irradiation selon au moins une des revendications précédentes,
**caractérisées en ce qu'**
on utilise la cyclohexanone, la 4-tert-butylcyclohexanone, la 3,3,5-triméthylcyclohexanone et l'heptanone seules ou en mélanges dans le composant A).

11. Résines durcissables par irradiation selon au moins une des revendications précédentes,
**caractérisées en ce que**
comme composants aldéhyde des résines cétone - aldéhyde hydrogénées sur le groupe carbonyle dans le composant A), on utilise le formaldéhyde, l'acétaldéhyde, l'aldéhyde n-butyrique et/ou l'aldéhyde isobutyrique, l'aldéhyde valérianique, le dodécanal, seuls ou en mélanges.

12. Résines durcissables par irradiation selon la revendication 11,
**caractérisées en ce qu'**
on utilise le formaldéhyde et/ou le para-formaldéhyde et/ou le trioxane.

13. Résines durcissables par irradiation selon la revendication 1 ou 2,
**caractérisées en ce qu'**
on utilise des produits d'hydrogénation des résines à base d'acétophénone, cyclohexanone, 4-tert-butylcyclohexanone, 3,3,5-triméthylcyclohexanone, heptanone, seules ou en mélanges et de formaldéhyde comme composant A.

14. Résines durcissables par irradiation selon au moins une des revendications précédentes,
**caractérisées en ce que**
dans les résines phénol-aldéhyde hydrogénées sur le noyau (composant B) on utilise les aldéhydes : formaldéhyde, aldéhyde butyrique et/ou benzaldéhyde.

15. Résines durcissables par irradiation selon au moins une des revendications précédentes,
**caractérisées en ce qu'**
on utilise les résines phénol-aldéhyde hydrogénées dans une moindre mesure.

16. Résines durcissables par irradiation selon au moins une des revendications précédentes,
**caractérisées en ce que**
dans le composant B), on utilise des résines hydrogénées sur le noyau à base de phénols akyl-substitués.

17. Résines durcissables par irradiation selon la revendication 16,
**caractérisées en ce qu'**
on utilise le 4-tert-butylphénol, le 4-amylphénol, le nonylphénol, le tertoctylphénol, le dodécylphénol, le crésol, des xylénols ainsi que des bisphénols, seuls ou en mélange.

18. Résines durcissables par irradiation selon au moins une des revendications précédentes,
**caractérisées en ce qu'**
on utilise comme composant C) l'acide maléique.

19. Résines durcissables par irradiation selon au moins une des revendications précédentes,
**caractérisées en ce qu'**
on utilise comme composants C) l'acide(méth)acrylique et/ ou des dérivés.

20. Résines durcissables par irradiation selon la revendication 19,
**caractérisées en ce qu'**
on utilise comme composant C) le chlorure de (méth)acryloyle, le (méth)acrylate de glycidyle, l'acide (méth)acrylique et/ou ses esters alkyliques et/ou anhydrides de faible poids moléculaire, seuls ou en mélanges.

21. Résines durcissables par irradiation selon au moins une des revendications précédentes,
**caractérisées en ce que**
comme composant C) on utilise des isocyanates qui comportent un groupement éthyléniquement insaturé, de préférence l'isocyanate de (méth)acryloyle, l'isocyanate de α,α-diméthyl-3-isopropénylbenzyle, l'isocyanate de (méth)acrylalkyle avec des espaceurs alkyle qui comportent plus de 1 à 12, de préférence 2 à 8, particulièrement préférablement 2 à 6 atomes de carbone, de préférence l'isocyanate de méthacryléthyle, l'isocyanate de méthacrylbutyle.

22. Résines durcissables par irradiation selon au moins une des revendications précédentes,
**caractérisées en ce que**
comme composant C) on utilise des produits de réaction de (mét)acrylates d'hydroxyalkyle dont les espaceurs alkyle comportent plus de 1 à 12, de préférence 2 à 8, particulièrement préférablement 2 à 6 atomes de carbone avec des di- et/ou polyisocyanates,

23. Résines durcissables par irradiation selon la revendication 22,
**caractérisées en ce qu'**
on utilise des diisocyanates choisis parmi le diisocyanate de cyclohexane, le diisocyanate de méthylcyclohexane, le diisocyanate d'éthylcyclohexane, le diisocyanate de propylcyclohexane, le diisocyanate de méthyldiéthylcyclohexane, le diisocyanate de phénylène, le diisocyanate de toluylène, le bis-(isocyanatophényl)méthane, le diisocyanate de propane, le diisocyanate de butane, le diisocyanate de pentane, le diisocyanate d'hexaméthylène (HDI), le 1,5-diisocyanato-2-méthylpentane (MPDI), le diisocyanated'heptane, le diisocyanate d'octane, le 1,6-diisocyanato-2,4,4-triméthylhexane, le 1,6-diisocyanato-2,2 ,4-triméthylhexane (TMDI), le diisocyanate de 4-isocyanatométhyl-1,8-octane (TIN), les di- et triisocyanates de décane, les di-et triisocyanates d'undécane, les di-et triisocyanates de dodécane, le diisocyanate d'isophorone (IPDI), le bis(isocyanatométhyl-cyclohexyl)méthane (H₁₂ MDI), l'isocyanate d'isocyanatométhylméthyl-cyclohexyle, le 2,5(2,6)-bis(isocyanatométhyl) bicclo(2,2,1)heptane (NBDI), le 1,3-bis(isocyanatoméhyl)cyclohexane (1,3-H₆ -XDI) le 1,4-bis(isocyanatométhyl)cyclohexane (1,4-H₆XDI), seuls ou en mélange.

24. Résines durcissables par irradiation selon la revendication 23,
**caractérisées en ce qu'**
on utilise des polyisocyanates préparés par trimérisation, allophanatisation, biurétisation et/ ou uréthanisation de diisocyanates simples.

25. Résines durcissables par irradiation selon au moins une des revendications précédentes,
**caractérisées en ce qu'**
on utilise comme composant C) les produits de réaction, dans un rapport molaire de 1/1 d'acrylate d'hydroxyéthyle et/ou de méthacrylate d'hydroxyéthyle avec du diisocyanate d'isophorone et/ ou H₁₂ MDI et/ ou HDI.

26. Résines durcissables par irradiation selon au moins une des revendications précédentes,
**caractérisées en ce qu'**
on utilise une mole de la résine cétone - aldéhyde hydrogénée sur le groupe carbonyle et/ ou de la résine phénol - aldéhyde hydrogénée sur le noyau, rapporté à Mₙ, et 0,5 à 15 mole(s), de préférence 1 à 10 mole(s), en particulier 2 à 8 moles du composé insaturé.

27. Procédé de préparation de résines durcissables par irradiation par réaction polymèranalogue
A) d'au moins une résine cétone-aldéhyde hydrogénée sur le groupe carbonyle, et/ou
B) d'au moins une résine phénol - aldéhyde hydrogénée sur le noyau avec
C) au moins un composé, qui comporte au moins un groupement éthyléniquement insaturé et en même temps au moins un groupement réactif vis-à-vis de A) et / ou B).

28. Procédé de préparation de résines durcissables par irradiation par réaction polymèrenalogue
A) d'au moins une résine cétone-aldéhyde hydrogénée sur le groupe carbonyle, et/ ou
B) d'au moins une résine phénol - aldéhyde hydrogénée sur le noyau avec
C) au moins un composé, qui comporte au moins un groupement éthyléniquement insaturé et en même temps au moins un groupement réactif vis-à-vis de A) et /ou B), et au moins un autre polymère à fonctionnalité hydroxy.

29. Procédé selon la revendication 27 ou 28,
**caractérisé en ce qu'**
on utilise un catalyseur.

30. Procédé selon les revendications 27 à 29
**caractérisé en ce que**, la réaction a lieu en milieu fondu ou dans un solvant.

31. Procédé selon au moins une des revendications précédentes 27 à 30,
**caractérisé en ce qu'**
on utilise les composés selon au moins une des revendications 2 à 26.

32. Procédé selon au moins une des revendications 27 à 31,
**caractérisé en ce que**
à la solution ou à la masse fondue des résines cétone - aldéhyde A) et/ou des résines phénol - aldéhyde B), on ajoute le composant C), le cas échéant en présence d'un catalyseur approprié.

33. Procédé selon au moins une des revendications 27 à 31,
**caractérisé en ce qu'**
à la solution ou à la masse fondue des résines cétone - aldéhydre A) et/ ou phénol - aldéhyde B) et au polymère à fonctionnalité hydroxy, on ajoute le composant C), le cas échéant en présence d'un catalyseur approprié.

34. Procédé selon au moins une des revendications 27 à 31,
**caractérisé en ce qu'**
à la solution ou à la masse fondue des résines phénol - aldéhyde A) et/ou urée - aldéhyde B) et au polymère à fonctionnalité hydroxy, on ajoute un isocyanate di- et /ou tri-fonctionnel et on produit un produit d'addition préalable à fonctionnalité hydroxy, et on ajoute ensuite le composant C) le cas échéant en présence d'un catalyseur approprié.

35. Procédé selon au moins une des revendications 27 à 34,
**caractérisé en ce que**
la réaction a lieu à des températures situées entre 30 et 150°C, de préférence entre 50 et 140 °C.

36. Procédé selon au moins une des revendications 27 à 35,
**caractérisé en ce qu'**
on utilise un polyéther, un polyester et/ou un polyacrylate comme polymère(s) à fonctionnalité hydroxy.
